# EUROPEAN PATENT APPLICATION

(11) **EP 2 275 801 A1**
(43) Date of publication of application: **19.01.2011**
(21) Application number: 09742737.1
(22) Date of filing: 01.05.2009
(51) Int. Cl.: G01N 21/64

(54) **AUTOMATIC ANALYZER**

(30) Priority: 08.05.2008 JP 2008121769
(71) Applicant: Hitachi High-Technologies Corporation, Minato-ku Tokyo 105-8717 (JP)
(72) Inventor: SASAKI Takahiro, Hitachinaka-shi Ibaraki 312-8504 (JP); ARUGA Yoichi, Hitachinaka-shi Ibaraki 312-8504 (JP); TANOUE Hidetsugu, Hitachinaka-shi Ibaraki 312-8504 (JP)
(74) Representative: Buchetmann, Dominik
(86) International application number: PCT/JP2009/058590
(87) International publication number: WO 2009/136613

(57) **Abstract**

The present invention provides an automatic analyzer that is capable of making accurate analyses of individual items having different concentration levels even when they are simultaneously measured. The automatic analyzer uses a marker that is to be attached to a measurement object. The marker is made of a substance that becomes excited when irradiated. The automatic analyzer has a function of varying irradiation intensity, and controls the intensity of light emitted from an item marker by adjusting the irradiation intensity for each analysis item or for each analysis vessel (1). Further, the automatic analyzer has a function of controlling the at least one of the position and angle of an analysis vessel (1) during irradiation, and controls the amount of radiation to the measurement object by adjusting the at least one of the distance and angle between an irradiation light source and analysis vessel (1) for each analysis item. Furthermore, the automatic analyzer has a function of varying the integration time of photometric means (2) and controls the integration time for each analysis item or for each analysis vessel (1).

## Description

### Technical Field

The present invention relates to an automatic analyzer that measures components of blood and other biological samples, and more particularly to an automatic analyzer capable of simultaneously making a plurality of different measurements.

### Background Art

An antigen-antibody reaction can be used to measure the concentration of a protein-based antigen in blood. When this method is used, a marker is attached to a substance that is generated during an antigen-antibody reaction and called an immune complex. The number of markers is then counted to measure the concentration of an antigen in either a qualitative or quantitative manner. Formerly, a radioactive element was used as a marker. At present, however, a luminescent material that emits light upon receipt of a certain trigger is generally used as a marker. Light can be emitted from a marker by a known method disclosed, for instance, in Patent Document 1, which describes light emission based on a chemical reaction, or by another known method disclosed, for instance, in Patent Document 2, which describes electrochemical luminescence in which a chemical reaction occurs with an electric field applied.

Still another known method is to irradiate a marker with excitation light and then measure the resulting luminescence (e.g., fluorescence or phosphorescence) that differs from the excitation light in wavelength.

An automatic analyzer automatically mixes a blood sample with a reagent, automatically allowing the blood sample to react with the reagent, automatically measuring the luminescence of a marker for the purpose of making an immunological analysis based on an antigen-antibody reaction. The automatic analyzer is widely used for pharmaceutical development and research and clinical tests. The use of an automatic analyzer based on an antigen-antibody reaction makes it possible to measure low-concentration regions, ranging in concentration from approximately 10⁻⁹ to 10⁻¹⁵ gcm⁻³, such as thyroid hormones or viruses in blood and cancer markers.

At present, the market demand for clinical tests is further increased so that important test items not only include viruses and hormones, but also include HAV, HBV, HIV, and other infections and cancer, rheumatism, and other diseases.

Conventional automatic analyzers mostly used a flow cell and measured the concentration of one antigen by performing a single analysis process. However, a DNA chip-based technology for simultaneously making a plurality of different analyses (measuring the concentrations of a plurality of antigens) by performing a single analysis process is described in Patent Document 3. When this technology is applied to a measurement system, a plurality of different antibodies are attached beforehand to an analysis vessel, and then a plurality of different antigen-antibody reactions are allowed to occur within the same chip for measurement purposes. The use of this system makes it possible to complete an analysis within a short period of time and reduce the amount of sample used for measurement as compared to the use of a conventional system.
Prior Art References
Patent Documents
Patent Document 1: JP-2003-50204-A
Patent Document 2: JP-11-507726-A
Patent Document 3: JP-10-319011-A

### Summary of the Invention

### Problems to be Solved by the Invention

Meanwhile, when an analysis is made with a fluorescent dye, the intensity of light is often very low. Further, when an analysis is made with a fluorescent dye, two types of light are used as mentioned earlier. More specifically, excitation light, which is used to irradiate a marker, that is, a measurement object, and irradiation light, which is emitted from the marker are used. It is therefore necessary to use a scheme that distinguishes between the two types of light. The existence of such a scheme may further obstruct the detection of low-intensity light. Consequently, an optical system capable of detecting a weak signal with high accuracy is more necessary for an analyzer using a fluorescent dye than for an analyzer using a different dye.

When a plurality of different measurements are to be simultaneously made (the concentrations of different antigens are to be simultaneously measured), there may be a case where one antigen abundantly exists whereas another antigen scarcely exists. In such a case, the absolute values of the intensities of light emitted from their respective markers greatly differ. Meanwhile, a light intensity measurement mechanism has a photometric level range (dynamic range). Therefore, when the photometric level range is adjusted for high light intensities, a marker having a low light intensity cannot be measured. When, on the contrary, the photometric level range is adjusted for low light intensities, a marker having a high light intensity cannot be measured due to an over-range condition.

An object of the present invention is to provide an automatic analyzer that is capable of making accurate analyses of individual items having different concentration levels even when they are simultaneously measured.

### Means for Solving the Problems

The automatic analyzer uses a marker that is to be attached to a measurement object. The marker is made of a substance that becomes excited when irradiated. The automatic analyzer has a function of varying irradiation intensity, and controls the intensity of light emitted from an item marker by adjusting the irradiation intensity for each analysis item or for each analysis vessel. Further, the automatic analyzer has a function of controlling the at least one of the position and angle of an analysis vessel during irradiation, and controls the amount of radiation to the measurement object by adjusting the at least one of the distance and angle between an irradiation light source and analysis vessel for each analysis item. Furthermore, the automatic analyzer has a function of varying the integration time of photometric means and controls the integration time for each analysis item or for each analysis vessel.

### Effect of the Invention

Two or more measurement items that differ in amount can be simultaneously measured with high accuracy by a single measurement system.

### Brief Description of the Drawings

FIG. 1 is a block diagram illustrating a first embodiment of the present invention.
FIG. 2 is a block diagram illustrating a second embodiment of the present invention.
FIG. 3 is a block diagram illustrating a third embodiment of the present invention.
FIG. 4 illustrates a detection mechanism.

### Mode for Carrying Out the Invention

Embodiments of the present invention will now be described with reference to the accompanying drawings.

### First Embodiment

A first embodiment of the present invention will now be described. The first embodiment controls irradiation intensity to adjust photometric conditions by using analysis parameters predefined for each analysis vessel or for each analysis item.

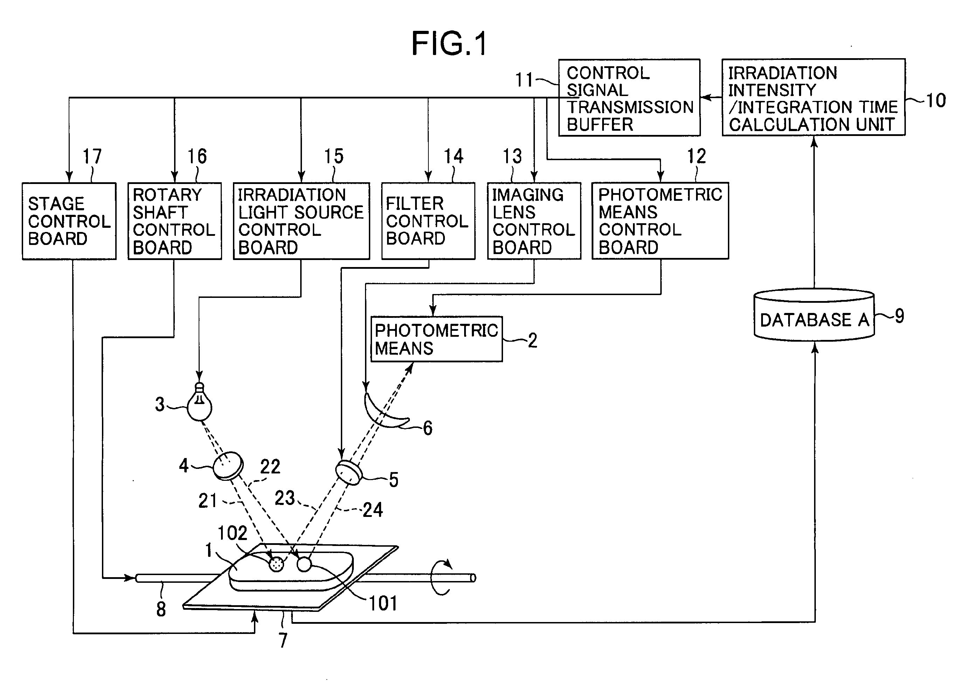

FIG. 1 is a block diagram illustrating a system according to the first embodiment. The system uses analysis parameters predefined for each analysis vessel or for each analysis item. In the present embodiment, different measurement object antigens and two different reacting antibodies are attached to the interior of an analysis vessel (1). It is assumed that the measurement object antigens differ in amount. A CCD, CMOS, PMT (photomultiplier), or other imaging sensor is used as photometric means (2). A substance that emits fluorescence when irradiated with excitation light is used as a marker. An LED, halogen lamp, or other white light source having a spectral center wavelength equal to the excitation wavelength of the marker is used as an irradiation light source (3).

The configuration of the system is depicted by the block diagram of FIG. 1. The system includes an analysis vessel (1); an irradiation light source (3); an irradiation side filter (4); a photometry side filter (5); an imaging lens (6); a stage (7); a rotary shaft (8); database A (9), which supplies analysis parameters; a calculation unit(10), which calculates irradiation intensity and integration time; a control signal transmission buffer (11); a photometric means control board (12); an imaging lens control board (13); a filter control board (14); an irradiation light source control board (15); a rotary shaft control board (16); and a stage control board (17).

First of all, a blood sample and a test reagent are mixed in the analysis vessel (1). An antibody attached to the analysis vessel (1) is then allowed to react with an antigen in the blood sample, which is a measurement object, to form a complex. Next, markers (101, 102) are attached to the complex. The markers (101, 102) emit fluorescence when exposed to excitation light.

If the light emitted from one marker significantly differs in intensity from the light emitted from the other marker in a situation where the irradiation intensity and the integration time of the photometric means are preset to fixed values, analyses cannot be made with high accuracy. If, for instance, the preset irradiation time is appropriate for the measurement of strong light in a situation where the difference between the light intensities converted to signal amounts is greater than the maximum output of the photometric means, a signal from weak light is hidden by a background signal or other noise. In this instance, effective measurements will not be made. Meanwhile, if the preset irradiation time is appropriate for the measurement of weak light in the above-mentioned situation, a high-level signal exceeds the maximum output value of the photometric means. Thus, the two different measurement objects cannot be effectively measured.

In view of the above circumstances, a function of varying the irradiation intensity and time is incorporated to provide means for controlling the at least one of the irradiation intensity and integration time for each analysis vessel. More specifically, the following means is provided.

When the complex is formed, the analysis vessel (1) is transported to the stage (7) for irradiation and measurement. Next, a signal is transmitted to database A (9) so that the irradiation intensity/integration time calculation unit (10) acquires analysis parameters, such as the irradiation intensity appropriate for analysis and the integration time of the photometric means, for each analysis item or for each analysis vessel in accordance with previously input information about analysis items. These analysis parameters are determined for the minimum production unit of the at least one of the test reagent and analysis vessel and supplied at the time of test reagent preparation. When the irradiation intensity appropriate for analysis and the integration time of the photometric means are selected, the analysis parameters are transmitted to the following elements through the control signal transmission buffer (11).

One analysis parameter is transmitted to the irradiation light source control board (15). The irradiation light source control board (15) controls the at least one of a voltage, an electric current, a duty ratio, and the number of duty cycles, and changes the light intensity of the irradiation light source (3) to a value selected by the analysis parameter calculation unit (10).

Another analysis parameter is transmitted to the photometric means control board (12). The photometric means control board (12) changes the integration time to a value selected by the analysis parameter calculation unit (10).
The light intensity of the irradiation light source (3) is at a disadvantage in that it does not readily stabilize irrespective of voltage changes and electric current changes. As such being the case, the following means is provided as an alternative.
A fluorescent dye is used as a marker. The use of such a marker is characterized in that an analysis is made by using two types of light, namely, the light exciting the dye and the light emitted from the excited dye. To obtain an effective amount of signal, therefore, it is necessary to separate the excitation light and irradiation light. In the present embodiment, filters (4, 5) are set in the at least one of an irradiation side path and a photometry side path. The value obtained from the analysis parameter calculation unit (10) is transmitted to the filter control board (14) through the control signal transmission buffer (11) so that an appropriate filter conforming to the specifications is selected and set. This makes it possible to control the transmittance of the at least one of the irradiation light and the light emitted from a marker. The effect produced as a result of such control is equivalent to the effect produced by controlling the irradiation intensity or the integration time of the photometric means. Further, the effect equivalent to the effected produced by controlling the irradiation intensity can be obtained by transmitting parameters to the stage control board (17) and rotary shaft control board (16) to move the stage (7) forward, rearward, leftward, or rightward for the purpose of controlling the distance between an analysis vessel and the irradiation light source (3) and rotate the rotary shaft (8) provided for the buffer to angle the optical path of the irradiation light source (3) for the purpose of controlling the energy of light incident on the marker. The equivalent effect can also be obtained by adjusting the aperture of the imaging lens (6) through the imaging lens control board (13).
After the optimum irradiation intensity or the integration time of the photometric means is set, the irradiation light source (3) is used to irradiate the markers (101, 102) attached to two types of complexes that differ in the amount of measurement object. When excited by the irradiation light (21, 22), the markers emit light (23, 24) having a fixed wavelength. The intensity of the emitted light correlates with the amount of measurement object. The photometric means (2) measures the light emitted from the markers by using an appropriate integration time determined as mentioned above. In this manner, measurements can be made by using sufficient significant digits even when two or more measurement objects differ in the amount of signal.

### Second Embodiment

A second embodiment of the present invention will now be described. The second embodiment includes means that uses two markers and two irradiation light sources, predicts the intensity of light emitted from one marker from data obtained by irradiating the other marker, and feeds the predicted light intensity back to actual measurements to adjust the photometric conditions.

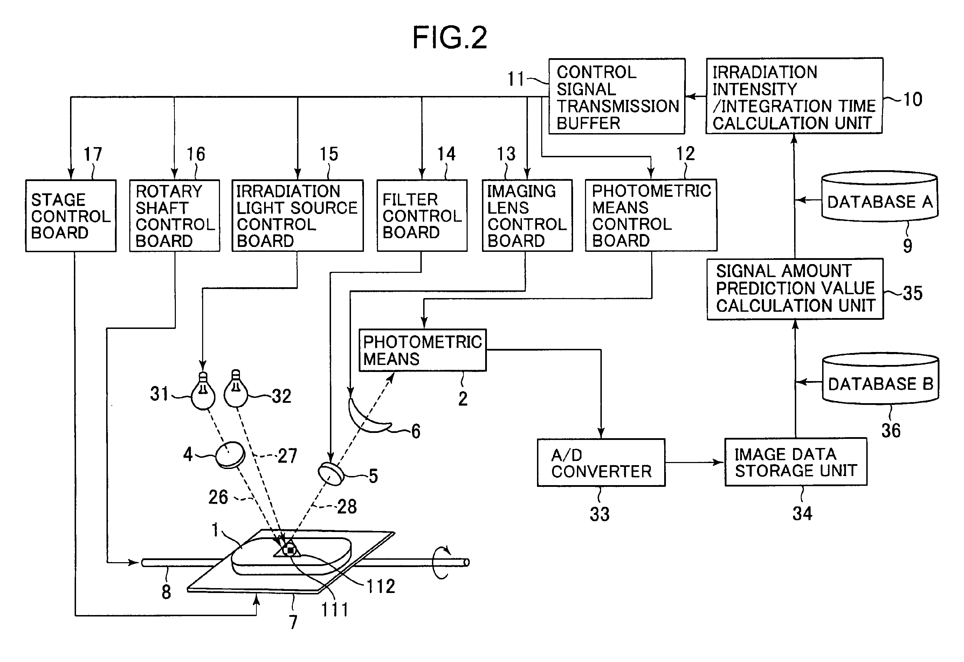

FIG. 2 is a block diagram illustrating the second embodiment. In the present embodiment, two different markers (111, 112), which are excited by different wavelengths of light, are attached to the same position of the analysis vessel (1). The system according to the present embodiment not only includes the elements included in the first embodiment, but also includes a first irradiation light source (31), a second irradiation light source (32), an A/D converter (33), an image data storage unit (34), a signal amount prediction value calculation unit (35), and database B (36).

As is the case with the system according to the first embodiment, the system according to the present embodiment may fail to effectively measure light emitted from the markers when the irradiation intensity or the integration time of the photometric means is fixed.

In the view of the above circumstances, the present embodiment provides the following means.

Although two different fluorescent dyes are employed, the light emitted from the dye excited by the first irradiation light source is used for concentration measurement, whereas the light emitted from the dye excited by the second irradiation light source is used for reaction position identification. The former (fluorescent dye excited by the first irradiation light source) is applied to a complex that is formed after the mixing of a blood sample and a test reagent. The latter (fluorescent dye excited by the second irradiation light source) is primitively spot-applied to a reaction vessel before the mixing of the blood sample and the test reagent. The amount of spot application of the latter is determined in accordance with the intensity of light emitted from the dye excited by the first irradiation light source. The latter is spot-applied by dedicated means that manufactures the reaction vessel.

In the resulting state, the second irradiation light source irradiates a place where the markers exist. Then photometric means (2) then measures the light emitted from the markers. The measured light is forwarded to the A/D converter (33) and subjected to analog-to-digital conversion. The data derived from the conversion is stored in the image data storage unit (34) as digital information.

Next, the data is transmitted to the signal amount prediction value calculation unit (35).

The information stored in the image data storage unit (34), which represents a signal amount, is proportional to the concentration to be measured. In accordance with the information stored in the image data storage unit (34), the signal amount prediction value calculation unit (35) predicts the intensity of light to be emitted from the first marker, which is used for concentration measurement.

Next, a prediction value representing the intensity of light to be emitted from the first marker, which is calculated by the signal amount prediction value calculation unit (35), is forwarded to the irradiation intensity/integration time calculation unit (10). This calculation unit references the information stored in database A (9), which is described in connection with the first embodiment, and calculates the irradiation intensity appropriate for the aforementioned measurements and the integration time of the photometric means.

These calculated pieces of information are transmitted through the control signal transmission buffer (11) to the photometric means control board (12), imaging lens control board (13), filter control board (14), irradiation light source control board (15), rotary shaft control board (16), and stage control board (17), as is the case with the first embodiment. Upon receipt of the transmitted information, these boards properly adjust the integration time of the photometric means (2), the aperture of the imaging lens (6), the specifications for the filters (4, 5), the light intensity of the irradiation light source (31), the angle of the rotary shaft (8), and the positional coordinates of the stage (7), respectively.

After the appropriate irradiation intensity and the integration time of the photometric means are set, the first irradiation light source irradiates the markers and measures the amounts of emitted signals.

As the optimum photometric conditions can be selected as described above, measurements can be made by using sufficient significant digits even when the calculated signal amounts differ from each other.

### Third Embodiment

A third embodiment of the present invention will now be described. In the third embodiment, which differs from the second embodiment, the intensity of fluorescence excited by the second irradiation light source, which relates to the dye spot-applied to a reaction vessel, may be fixed without regard to the intensity of light excited by the first irradiation light source.

When, for instance, the excitation light for the fluorescence excited by the first irradiation light source (hereinafter referred to as the first fluorescence), which is used for concentration measurement, is similar in wavelength to the excitation light for the fluorescence excited by the second irradiation light source (hereinafter referred to as the second fluorescence), which is used for reaction position identification, crosstalk occurs between these two wavelengths of excitation light.

When the second irradiation light source is used to provide irradiation for the second fluorescence, light is derived not only from the second fluorescence but also from the first fluorescence. Therefore, the light intensity to be measured includes the contribution of the latter. In this respect, the spectra of the excitation light and irradiation light for the first fluorescence and the second fluorescence are strictly determined in accordance with an atomic structure and remain unchanged irrespective of an employed measurement environment. Further, as the irradiation light sources are made of an LED, control can be exercised so that the profile of the spectrum of the irradiation light virtually remains unchanged. When these optical characteristics are used, the ratio between the levels of irradiance received for the first fluorescence and the second fluorescence can be model-calculated. Thus, the ratio between the irradiations can be calculated. This ratio remains constant irrespective of measurements because it is determined by fluorescence spectra.

This ratio makes it possible to calculate the intensity of light derived from the first fluorescence, which is one of the measured light intensities. As the intensity of light derived from the first fluorescence is proportional to the concentration of a measurement object, the magnitude of concentration can be relatively determined by performing calculations on the intensity of light.

As described above, the concentration can be roughly estimated from the data derived from the light emitted for reaction position identification. Thus, the obtained information can be used to select appropriate measurement conditions.

When the above-described method is used, measurements can be made by using sufficient significant digits even when the calculated signal amounts differ from each other.

### Fourth Embodiment

A fourth embodiment of the present invention will now be described. The fourth embodiment includes analysis means that compares the amount of signal against the maximum output value of measurement means and feeds the result of the comparison back to photometric measurements.

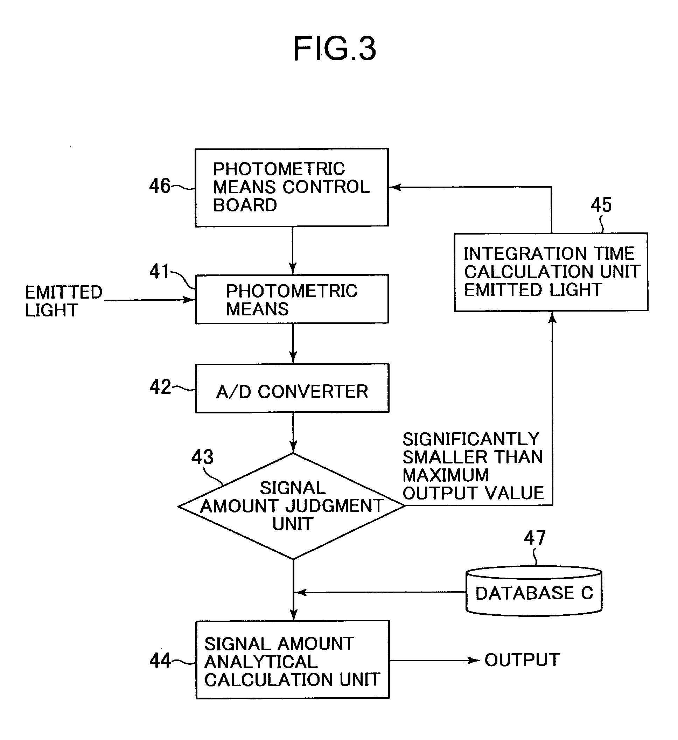

FIG. 3 is a block diagram illustrating the fourth embodiment.

The present embodiment provides means that, when two or more types of items significantly differing in the amount of measurement object are simultaneously measured, optimizes the photometric conditions in accordance with data derived from the first measurement, and feeds back the optimized photometric conditions.

At first, photometric measurements are initiated under photometric conditions suitable for the measurement of weak light emitted from a marker attached to a measurement object that is relatively small in amount. Imaging data acquired in this instance includes information about weak light and information about strong light. The imaging data is first forwarded to an A/D converter (42) and converted into digital form. The obtained digital data is then transmitted to a signal amount judgment unit (43). The signal amount judgment unit (43) focuses on the amount of signal provided by strong light emitted from a marker attached to the other measurement object that is relatively large in amount, and compares the amount of a high-level signal against the maximum output value of the photometric means.

If the amount of a high-level signal is significantly smaller than the maximum output value, the relevant information is transmitted to an integration time calculation unit (45). The integration time calculation unit (45) calculates the integration time suitable for the aforementioned photometric measurements. The integration time calculated by the integration time calculation unit (45) is then transmitted to a control board (46). The control board (46) receives a value representing the integration time and controls the integration time of the photometric means in accordance with the received value. When photometric measurements are made again by using the controlled integration time, effective measurements can be made. The use of the above-described means makes it possible to obtain photometric conditions under which the amount of a high-level signal is equivalent to the maximum output value of the photometric means. As a result, a maximum amount of signal can be obtained while maintaining conditions where the amount of a low-level signal and the amount of a high-level signal can be separately measured.

Meanwhile, if the amount of a high-level signal is found to be not smaller than the maximum output value, the relevant positional information is transmitted to a signal amount analytical calculation unit (44). The signal amount analytical calculation unit (44) includes means that processes a portion where the amount of signal is greater than the maximum output value. More specifically, the signal amount analytical calculation unit (44) excludes the portion where the amount of signal is greater than the maximum output value, and calculates the amount of signal by using only values smaller than the maximum output value.

The method of calculating the signal amount will now be described. A function expressing a light intensity spatial distribution and a plurality of parameters serving as coefficients of the function are stored beforehand in database C (47). The function and parameters are determined by the characteristics of the lens and photometric means, which are constituent elements of a detection unit, and by the characteristics of a test reagent and measurement object. Basically, the function and parameters are supplied at the time of detection unit manufacture. The function is introduced into the signal amount analytical calculation unit (44) and optimized by using the signal amount smaller than the maximum output value. Once the function is optimized, the value of a region excluded as described above can be predicted by interpolating the function.

When the above-described method is used, accurate measurements can be made by using a prediction value based on the optimized function even if two types of items significantly differ in the amount of measurement object so that the amount of a high-level signal is greater than the maximum output value of the photometric means.

### Fifth Embodiment

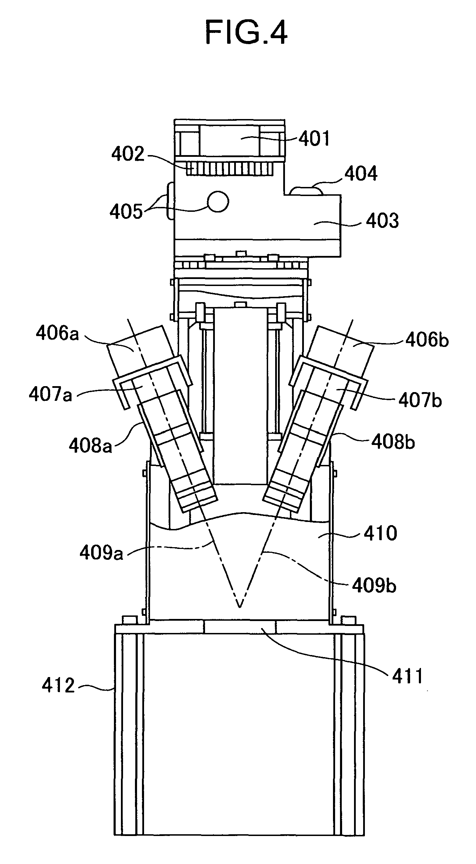

A fifth embodiment of the present invention will now be described. FIG. 4 shows the detailed configuration of a detection system that meets the conditions described in connection with the first to fourth embodiments. The detection system includes three major elements. From top to bottom, the major elements are a photometry unit (403), a light source unit (407), and a measurement object unit (410).

A CCD camera capable of measuring a 16-bit signal count is employed as a sensor of the photometry unit (403) in order to obtain a 4-digit dynamic range as a raw capability value of the sensor. In addition, a fan (401) and an air duct (402) are installed to inhibit a temperature rise caused by successive measurements and reduce thermally-induced signal noise.

The camera is provided with a connector connection port (404), which connects the camera to an external controller. The communication with the camera and the overall operation of the detection system can be controlled through a controller connected to the connector connection port (404).

The camera is fastened to the detection system with connecting screws (405) in order to achieve high positional accuracy required for the production of accurate analysis results.

The light source unit (407) includes a first light source (407a) and a second light source (407b). The first light source (407a) gives irradiation within a wavelength region that excites a fluorescent dye for concentration measurement. The second light source (407b) gives irradiation within a wavelength region that excites a fluorescent dye for reaction position identification. The system according to the present embodiment uses LEDs that differ in wavelength.

Lens barrels (408) are provided in a space between the LEDs and the reaction vessel. A condensing lens is placed in the lens barrels (408) to reinforce the intensity of light incident on a measurement object.

A heat sink (406) is provided for each LED to reduce the burden on a circuit board by inhibiting an LED temperature rise, which may be caused by prolonged LED illumination and an increase in electrical current.

Excitation light travels through each irradiation path (409), propagates to the reaction vessel, and provides irradiation for the fluorescence in the reaction vessel. A predetermined angle (414) is formed between a vertical direction (413) and a light source mounting direction to irradiate a measurement object in a symmetrical manner.

An incidence path (413) is formed in a space between the reaction vessel and the camera (403). Light emitted from a fluorescent dye travels through an optical lens placed in the incidence path (413) and forms an image at the end of the camera (403).

The measurement object unit (410) is provided with a buggy (411) that is movable within a base region (412). Therefore, the focal position and measurement range can be adjusted by controlling the position of the buggy (411) from the outside.

While the above configuration is employed, a sample is allowed to react with a reagent in advance, the reaction vessel is placed in the buggy (411) with a reaction position and reactant marked with a fluorescent dye, and the first light source is used to irradiate the reaction vessel. The fluorescent dye in the reaction vessel first becomes excited by the energy of irradiation light and then emits light. The light emitted in the vertical direction travels through the incidence path (413) to form an image at the end of the camera (401) above. In this manner, the light emitted from the fluorescent dye is photometrically measured and processed into signal amount data.

In accordance with the sequence of control described in connection with the first to fourth embodiments, conditions more suitable for the measurement of a fluorescent dye for concentration measurement are derived from the information about the signal amount to control various mechanisms through the connector connection port (404) above the camera (401).

When the above-described method is used, accurate measurements can be made even if two types of items significantly differ in the amount of measurement object so that the amount of a high-level signal is greater than the maximum output value of the photometric means.

### Sixth Embodiment

A sixth embodiment of the present invention will now be described. The sixth embodiment includes means that automatically spot-applies a reagent for reaction position identification and a reagent for concentration measurement to appropriate positions within the reaction vessel in accordance with a measurement request from a user.

### Description of Reference Numerals

- 1: Analysis vessel
- 2, 41: Photometric means
- 3: Irradiation light source
- 4: Irradiation side filter
- 5: Photometry side filter
- 6: Photometry side lens
- 7: Analysis vessel stage
- 8: Rotary shaft
- 9: Database A (for supplying analysis parameters)
- 10: Irradiation intensity/integration time (analysis parameter) calculation unit
- 11: Control signal transmission buffer
- 12: Photometric means control board
- 13: Imaging lens control board
- 14: Filter control board
- 15: Irradiation light source control board
- 16: Rotary shaft control board
- 17: Stage control board
- 21: Irradiation light incident on a marker attached to a complex including a sample having a large amount of measurement object
- 22: Irradiation light incident on a marker attached to a complex including a sample having a small amount of measurement object
- 23: Light emitted from a marker attached to a complex including a sample having a large amount of measurement object
- 24: Light emitted from a marker attached to a complex including a sample having a small amount of measurement object
- 26: Light irradiated from the first irradiation light source
- 27: Light irradiated from the second irradiation light source
- 28: Light emitted from a marker excited by the first irradiation light and the second irradiation light
- 31: First irradiation light source
- 32: Second irradiation light source
- 33, 42: A/D converter
- 34: Image data storage unit
- 35: Signal amount prediction value calculation unit
- 36: Database B (for calculating a prediction value representing the intensity of light emitted from the first marker)
- 43: Signal amount judgment unit
- 44: Signal amount analytical calculation unit
- 45: Integration time calculation unit
- 46: Photometric means control board
- 47: Database C (for supplying a light intensity spatial distribution function and parameters)
- 101: Marker attached to a complex including a sample having a large amount of measurement object
- 102: Marker attached to a complex including a sample having a small amount of measurement object
- 111: First marker attached to the same position as the second marker
- 112: Second marker attached to the same position as the first marker
- 401: Fan
- 402: Air duct
- 403: Photometry unit
- 404: Connector connection port
- 405: Connecting screw
- 406a: Heat sink (first light source)
- 406b: Heat sink (second light source)
- 407a: First irradiation light source
- 407b: Second irradiation light source
- 408a: Lens barrel (first light source)
- 408b: Lens barrel (second light source)
- 409a: Irradiation light path (first light source)
- 409b: Irradiation light path (second light source)
- 410: Measurement object unit (measurement space)
- 411: Buggy (reaction vessel retention space)
- 412: Base

## Claims

1. An automatic analyzer comprising:
a reaction vessel (1) to which reagents for different analysis items are attached;
irradiation means (3, 31, 32) for irradiating the reaction vessel (1);
photometric means (2) for measuring light emitted from the reagents for different analysis items; and
control means (11) for controlling either irradiation conditions for the irradiation means (3, 31, 32) or photometric conditions for the photometric means (2) on an individual analysis item basis.

2. The automatic analyzer according to claim 1,
wherein the reagents spot-applied to the reaction vessel (1) include a reagent for reaction position identification; and wherein the control means (11) controls either the irradiation conditions or the photometric conditions in accordance with light emitted from the reagent for reaction position identification.

3. The automatic analyzer according to claim 1,
wherein the irradiation conditions are defined by irradiation intensity.

4. The automatic analyzer according to claim 1,
wherein the photometric conditions are defined by the integration time of photometric intensity.

5. The automatic analyzer according to claim 1,
wherein the reagents for different analysis items are attached to the bottom of the reaction vessel (1).

6. The automatic analyzer according to claim 1,
wherein the control means (11) controls either the irradiation conditions for the irradiation means (3, 31, 23) or the photometric conditions for the photometric means (2) on an individual reaction vessel basis.

7. The automatic analyzer according to claim 1,
wherein the irradiation conditions are controlled by regulating either the voltage applied to the irradiation light source (3, 31, 32) or the electrical current flowing therein.

8. The automatic analyzer according to claim 1,
wherein the irradiation conditions are controlled by regulating the illumination duty ratio of the irradiation light source (3, 31, 32).

9. The automatic analyzer according to claim 1,
wherein the irradiation conditions are controlled by mounting a filter (4, 5) in the at least one of an irradiation side optical path and a photometry side optical path and regulating the transmittance of the at least one of irradiation light and light emitted from a marker.

10. The automatic analyzer according to claim 1,
wherein the irradiation conditions are controlled by adjusting the aperture (f-number) of a lens mounted in the at least one of the irradiation side optical path and the photometry side optical path for the purpose of regulating the intensity of light incident on the photometric means (2).

11. The automatic analyzer according to claim 1, further comprising:
storage means (10) for storing analysis parameters either for each analysis item or for each analysis vessel (1) ;
wherein, when an analysis is to be made, the control means (11) reads the analysis parameters for an analysis item or for an analysis vessel (1) from the storage means (10) and sets the irradiation conditions or the photometric conditions for the photometric means (2).

12. The automatic analyzer according to claim 1, further comprising:
means (7, 17) for varying the distance between the irradiation light source and the reaction vessel to adjust the irradiation conditions.

13. The automatic analyzer according to claim 1, further comprising:
means (7, 17) for varying the angle between the irradiation light source and the reaction vessel to adjust the irradiation conditions.

14. The automatic analyzer according to claim 1, further comprising:
means (15) for varying irradiation time;
means for comparing the amount of signal acquired upon each photometric measurement of light emitted from the marker against the maximum output value of a fundamental unit of the photometric means (2); and
means for automatically optimizing the integration time in accordance with the result of the comparison.

15. The automatic analyzer according to claim 14, further comprising:
means for excluding a region where the amount of signal is greater than the maximum output value of the photometric means (2), approximating the spatial distribution of a light intensity given beforehand to the automatic analyzer with only a signal amount smaller than the maximum output value by using appropriate parameters and an optimum function; and
means (35) for estimating the amount of signal in the excluded region by extrapolating the function.

16. The automatic analyzer according to claim 2,
wherein the amount of the reaction position identification reagent spot-applied to the reaction vessel is proportional to the intensity of light emitted from a concentration measurement reagent.
